(19) Europäisches Patentamt / European Patent Office / Office européen des brevets

(11) **EP 3 781 965 B1**

(12) **FASCICULE DE BREVET EUROPEEN**

(45) Date de publication et mention de la délivrance du brevet:
**15.02.2023 Bulletin 2023/07**

(21) Numéro de dépôt: **19719462.4**

(22) Date de dépôt: **17.04.2019**

(51) Classification Internationale des Brevets (IPC):
***G01S 13/95*** (1980.01)

(52) Classification Coopérative des Brevets (CPC):
**G01S 13/951;** Y02A 90/10

(86) Numéro de dépôt international:
**PCT/EP2019/059883**

(87) Numéro de publication internationale:
**WO 2019/201975 (24.10.2019 Gazette 2019/43)**

(54) **DISPOSITIF, PROCEDE ET PRODUIT PROGRAMME D'ORDINATEUR DE VALIDATION DE DONNEES FOURNIES PAR UNE SONDE PLUVIOMETRIQUE**

VORRICHTUNG, VERFAHREN UND COMPUTERPROGRAMMPRODUKT ZUR VALIDIERUNG VON DURCH EINEN REGENSENSOR BEREITGESTELLTEN DATEN

DEVICE, METHOD AND COMPUTER PROGRAM PRODUCT FOR VALIDATING DATA PROVIDED BY A RAIN SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.04.2018 FR 1853324**

(43) Date de publication de la demande:
**24.02.2021 Bulletin 2021/08**

(73) Titulaire: **Suez International**
**92040 Paris La Défense Cedex (FR)**

(72) Inventeurs:
- **DELMAS, Simon**
  **33400 Talence (FR)**
- **SCHOORENS, Jérôme**
  **78230 Le Pecq (FR)**

(74) Mandataire: **Atout PI Laplace**
**Immeuble "Visium"**
**22, avenue Aristide Briand**
**94117 Arcueil Cedex (FR)**

(56) Documents cités:
**FR-A1- 3 052 567    JP-A- 2004 361 314**
**JP-A- 2005 017 266**

EP 3 781 965 B1

**Description**

**Domaine de l'invention**

L'invention concerne le domaine technique du traitement de données, et en particulier elle concerne la validation en temps-réel de données pluviométriques.

**Etat de la Technique**

Il existe de nombreux domaines où le pilotage d'un ensemble d'équipements doit se faire de manière dynamique afin d'adapter en temps-réel le fonctionnement des équipements selon la situation. Un cas particulier est celui du pilotage dynamique d'un réseau fluidique, tel que par exemple un réseau d'assainissement.

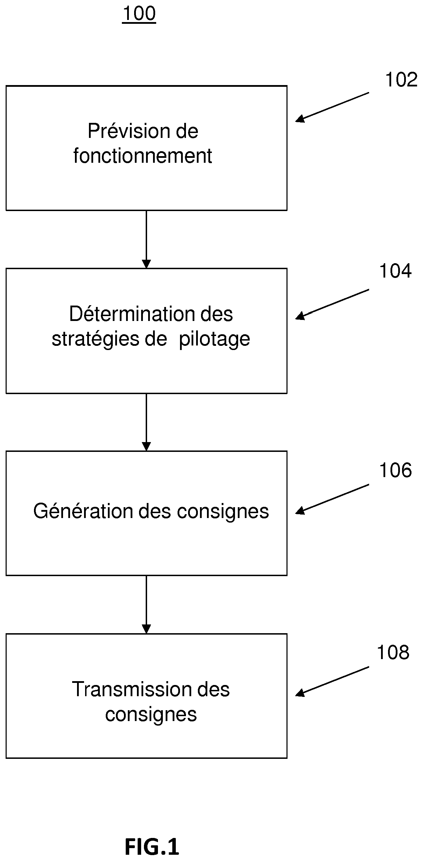

La figure 1 illustre de manière simplifiée différentes étapes qui interviennent lors du pilotage d'un réseau fluidique. D'une manière générale, un tel procédé 100 comprend au moins une étape 102 de prévision de fonctionnement, une étape 104 de sélection d'une stratégie de pilotage, une étape 106 de génération de consignes et une étape 108 de transmission d'une consigne de régulation à destination d'un actionneur du réseau fluidique.

L'étape 102 de prévision de fonctionnement comprend au moins des étapes d'acquisition de données, de validation des données, de reconstruction des données valides et de calcul d'états. Il n'est cependant pas décrit plus en détail toutes les étapes du procédé mais l'homme du métier peut se référer par exemple à la demande de brevet FR3052567 déposée par le Demandeur. La validation des données est une étape technique majeure sur laquelle repose le processus décisionnel qui s'en suit.

Dans les procédés connus de pilotage de réseau fluidique, l'étape de validation des données prend en compte soit des données issues de radars météorologiques ou données « radar », soit des données issues de sondes pluviométriques ou données « sonde ».

Les données radar apportent une information précise sur le positionnement d'un évènement pluvieux, mais elles ne renseignent pas de manière suffisamment précise sur l'intensité des précipitations. Aussi, elles ne peuvent pas être utilisées comme données fiables dans des modèles d'hydrologie de procédés de pilotage d'un réseau fluidique, lors d'étapes de prévision.

Les données sonde renseignent sur l'intensité des précipitations mais leur acquisition reste soumise à de nombreux aléas liés aux pluviomètres qui peuvent avoir des défauts mécaniques, être mal positionnés, avoir une mauvaise orientation qui empêche la pluie de bien entrer dans le réceptacle et de fait fournir des résultats incohérents.

La demande de brevet JP 2005 017266 A de Toshiba Corporation, propose une solution pour valider les données fournies par une sonde pluviométrique selon la valeur d'un coefficient de corrélation entre une estimation de précipitations d'un radar météorologique et les données pluviométriques de la sonde.

La demande de brevet JP 2004 36134 A de Toshiba Corporation, propose une solution pour valider les données d'un réseau de sondes pluviométriques si la valeur de précipitation est supérieure à un seuil, les sondes indiquant des valeurs trop faibles par rapport à leur voisines sont considérées comme défaillantes.

Or le pilotage des équipements devant se faire de manière dynamique, l'étape d'analyse des données doit se faire en temps-réel, ce qui n'est actuellement pas le cas. De surcroit, les données qui sont retenues pour l'analyse doivent être des données fiables. En effet, des consignes qui seraient basées sur des données qui ne sont pas valides, peuvent avoir dans tout processus de régulation, de multiples conséquences qu'elles soient économiques ou humaines.

Il existe alors le besoin d'un procédé et d'un dispositif permettant de valider en temps-réel des données relatives à des précipitations.

La présente invention répond à ce besoin.

**Résumé de l'invention**

Un objet de la présente invention concerne un procédé mis en oeuvre par ordinateur permettant de valider en temps-réel des données relatives à des précipitations.

La présente invention vise à pallier les limites des techniques connues en proposant un procédé et un dispositif dont le principe général consiste à croiser sur une fenêtre temporelle et géographique, des informations de nature et d'origine différentes permettant de déterminer les seules données relatives à des précipitations qui sont valides.

Pour obtenir les résultats recherchés, il est proposé un procédé mis en oeuvre par ordinateur pour valider des données fournies par une sonde pluviométrique. Dans un mode de réalisation, le procédé comprend des étapes consistant à :

- recevoir sur une fenêtre de temps déterminée, des données pluviométriques d'une sonde et des données météorologiques d'au moins un radar météorologique ;

- calculer un coefficient de similitude sonde/radar entre les données pluviométriques reçues de ladite sonde et les données météorologiques reçues dudit au moins un radar météorologique ;
- comparer la valeur du coefficient de similitude sonde/radar obtenue à une valeur seuil sonde/radar ; et
- si la valeur du coefficient de similitude sonde/radar est inférieur à la valeur seuil sonde/radar :

    - identifier dans une zone géographique donnée, un ensemble de sondes voisines de ladite sonde ;
    - déterminer parmi les sondes voisines celles appartenant à une même cellule pluvieuse que ladite sonde, une cellule pluvieuse regroupant des sondes dont les données météorologiques reçues dudit au moins un radar aux positions de ces sondes sont similaires au cours de ladite fenêtre de temps ;
    - calculer un coefficient de similitude sonde/sonde entre les données pluviométriques de ladite sonde et les données pluviométriques de chacune des sondes voisines appartenant à la même cellule pluvieuse ;
    - agréger les résultats des calculs des coefficients de similitude sonde/sonde pour obtenir une valeur de coefficient de similitude sonde/sonde ;
    - comparer la valeur du coefficient de similitude sonde/sonde agrégé à une valeur seuil sonde/sonde ; et

- valider les données pluviométriques de ladite sonde si la valeur du coefficient de similitude sonde/sonde est supérieure ou égale à la valeur seuil sonde/sonde.

Selon des modes de réalisations du procédé, alternativement ou en combinaison, l'étape de calcul d'un coefficient de similitude sonde/radar consiste à effectuer un prétraitement des données reçues, permettant de calculer un coefficient de similitude sonde/radar entre des signaux de pluviométrie enregistré par la sonde et des signaux de pluviométrie dudit au moins un radar extraient à la position de ladite sonde, lesdits signaux étant enregistrés sur ladite fenêtre de temps.

Selon des modes de réalisations du procédé, alternativement ou en combinaison, le coefficient de similitude sonde/radar est un critère statistique de mesure de la similitude choisi parmi les critères Index of Agreement, Nash-Sutcliffe ou corrélation croisée.

Selon des modes de réalisations du procédé, alternativement ou en combinaison, les données reçues sont relatives à une intensité de précipitations ou à une localisation de précipitations.

Dans un mode de réalisation, l'étape d'agrégation consiste à sélectionner la valeur maximum ou la valeur minimum des coefficients de similitude sonde/sonde ou à faire une moyenne des valeurs des coefficients de similitude sonde/sonde.

Selon des modes de réalisations du procédé, alternativement ou en combinaison, si la valeur du coefficient de similitude sonde/sonde est inférieure à la valeur seuil sonde/sonde, le procédé comprend après l'étape de comparaison de la valeur du coefficient de similitude sonde/sonde, une étape consistant à invalider les données de ladite sonde.

Selon des modes de réalisations du procédé, alternativement ou en combinaison, le coefficient de similitude sonde/sonde est un critère statistique de mesure de la similitude entre deux signaux temporels.

Selon des modes de réalisations du procédé après l'étape de réception de données pluviométriques et de données radar météorologiques, le procédé comprend une étape consistant à comparer pour ladite sonde et pour ledit au moins un radar, des cumuls pluviométriques à un seuil de pluie afin de déterminer un contexte météorologique de présence de pluie ou d'absence de pluie, puis à opérer les étapes de calcul du coefficient de similitude sonde/radar si le contexte météorologique est la présence de pluie.

Selon des modes de réalisations du procédé, alternativement ou en combinaison, après l'étape de comparaison des cumuls pluviométriques à un seuil de pluie, le procédé comprend une étape consistant à valider les données pluviométriques de ladite sonde si le contexte météorologique est l'absence de pluie, puis à reboucler sur les étapes de réception de données.

Selon des modes de réalisations du procédé, alternativement ou en combinaison, si la comparaison des cumuls pluviométriques à un seuil de pluie, ne permet pas de définir un contexte météorologique de présence ou d'absence de pluie, et est un contexte indéterminé, le procédé consiste à opérer des étapes permettant de traiter les états indéterminés.

Selon des modes de réalisations du procédé, alternativement ou en combinaison, la durée de l'ensemble des étapes afin de valider les données de ladite sonde est une période paramétrable.

Selon des modes de réalisations du procédé, alternativement ou en combinaison, le procédé comprend une étape consistant à classer ladite sonde comme sonde défaillante si elle fournit des données invalides sur plusieurs périodes.

L'invention couvre aussi un produit programme d'ordinateur comprenant un programme, ledit programme comprenant des instructions de code permettant d'effectuer les étapes du procédé revendiqué selon l'une quelconque des revendications, lorsque ledit programme est exécuté sur un ordinateur.

Selon un autre aspect, l'invention couvre un système permettant de déterminer parmi une pluralité de sondes aptes à fournir des données pluviométriques, des sondes fournissant des données valides, la pluralité de sondes couvrant une zone donnée, le système comprenant des moyens pour mettre en oeuvre les étapes du procédé revendiqué selon l'une quelconque des revendications.

Avantageusement, le procédé et le système revendiqués peuvent être applicables au domaine des réseaux fluidiques et en particulier leur utilisation dans un procédé de pilotage d'un réseau fluidique qui comprend au moins une étape de validation de données de sondes pluviométriques.

Une autre application avantageuse du procédé et du système de l'invention, est le domaine des prévisions météorologiques et en particulier leur utilisation dans un procédé de prévision d'inondations qui comprend au moins une étape de validation de données de sondes pluviométriques.

## Description des figures

D'autres caractéristiques et avantages de l'invention apparaîtront à l'aide de la description qui suit et des figures des dessins annexés dans lesquels :

La figure 1 illustre de manière schématique différents étapes intervenants dans un procédé connu pour piloter un réseau fluidique ;

La figure 2 montre un enchainement d'étapes du procédé de l'invention selon un mode de réalisation ;

La figure 3 illustre pour une zone géographique des emplacements d'une pluralité de sondes pluviométriques et d'un radar ;

La figure 4 illustre des signaux d'acquisition de données pluviométriques d'une sonde et de données météorologiques d'un radar sur une fenêtre de temps déterminée ;

La figure 5 montre un enchainement d'étapes du procédé de l'invention permettant de traiter les états indéterminés ;

La figure 6 montre un enchainement d'étapes du procédé de l'invention permettant de déterminer un contexte météorologique.

## Description détaillée de l'invention

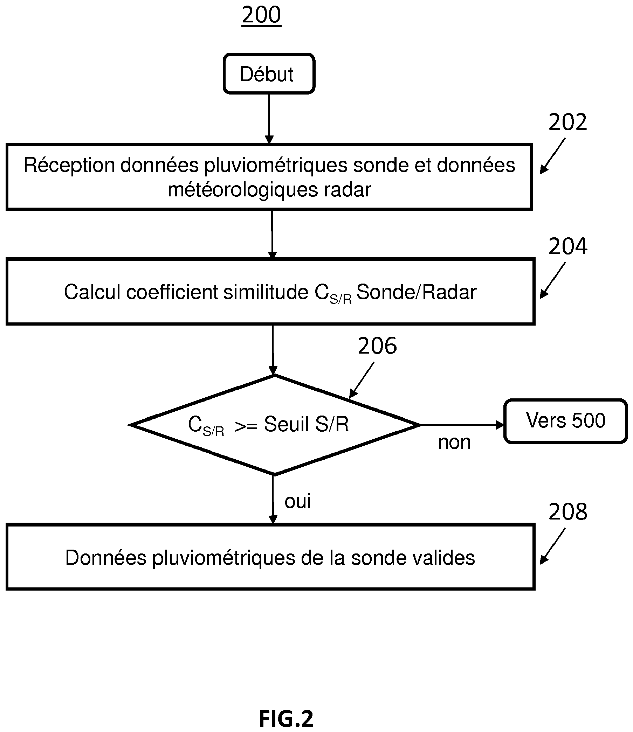

D'une manière générale, le principe de l'invention consiste à valider les données pluviométriques fournies par une sonde si elles sont en cohérence, selon un coefficient de similitude approprié, avec les données météorologiques fournies par un radar au niveau de la sonde. La figure 2 montre un enchainement d'étapes 200 du procédé de l'invention selon un mode de réalisation. Les étapes peuvent être opérées sur un ordinateur ou sur une plateforme de calcul dédiée d'un système de pilotage de réseau fluidique comprenant des processeurs configurés pour mettre en oeuvre le procédé et permettant de récupérer ou recevoir et/ou acquérir des données pluviométriques de sondes et des données météorologiques d'au moins un radar. Un tel ordinateur ou plateforme de calcul comprend des composants spécifiquement programmés par instructions de code pour effectuer les étapes du procédé. Le système peut aussi comprendre différents serveurs permettant de récupérer les données, de les stocker, de les traiter.

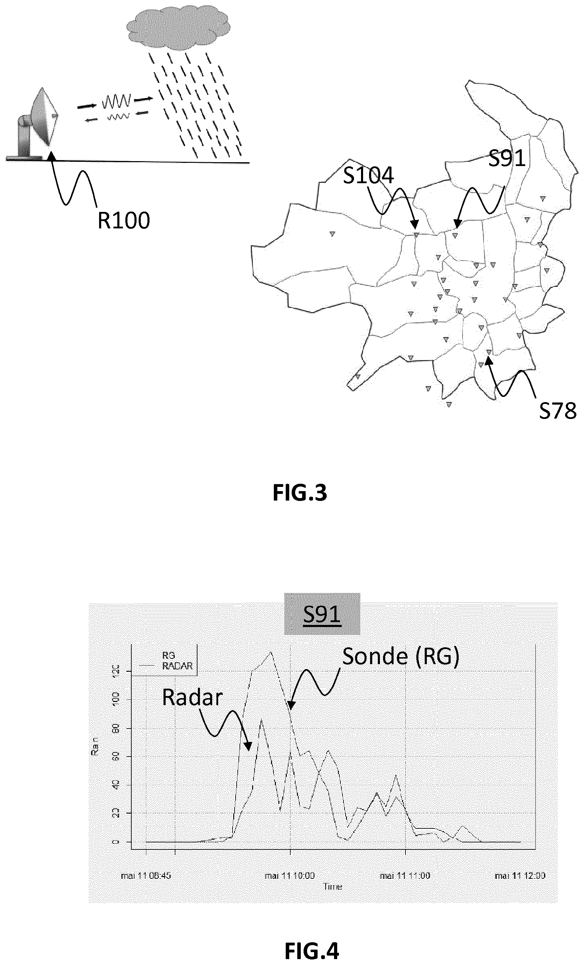

Par simplification, le procédé est décrit pour une sonde mais les principes restent applicables pour une pluralité de sondes. La figure 3 illustre une zone géographique comprenant une pluralité de sondes pluviométriques et au moins un radar météorologique (R100) apte à d'observer des précipitations à distance à l'aide d'ondes radio. Le fonctionnement d'un radar météorologique consiste principalement à émettre de manière périodique une impulsion électromagnétique de très courte durée et à écouter les échos renvoyés par les particules de précipitations ou gouttes de pluie, flocons de neige, grêlons... Le temps qui s'écoule entre l'émission de l'impulsion et la réception de l'écho permet de repérer la position, l'intensité et le déplacement des précipitations. Sur la figure 3, seules quelques sondes (S78, S91, S104) sont référencées par souci de clarté, mais l'ensemble des sondes sur une zone géographique avec la position de chaque sonde sont répertoriés.

Le procédé 200 débute par une étape 202 d'acquisition ou de réception sur une fenêtre temporelle $\Delta t$ de données brutes, données pluviométriques pour une sonde par exemple les données de la sonde S91, et données météorologiques radar correspondant à la position de cette sonde S91. Selon des variantes de réalisation, les données brutes reçues peuvent être relatives à l'intensité des précipitations, par exemple une valeur en millimètres sur une durée de 5 minutes, ou relatives à la localisation des précipitations. La figure 4 illustre pour une fenêtre de temps donnée, des signaux temporels d'acquisition de données pluviométriques sonde, dans l'exemple la sonde S91, et de données météorologiques radar.

Dans une étape suivante 204, le procédé permet de calculer un coefficient de similitude sonde/radar 'C$_{S/R}$' entre les données sonde et les données radar. Le critère ou coefficient de similitude est un critère statistique adimensionné de type connu, pour des données d'entrées qui sont deux signaux temporels (pluviométrique et radar) échantillonné en temps à la même fréquence.

Dans un mode de réalisation, l'étape de calcul consiste à effectuer un prétraitement des données brutes reçues de manière à calculer un coefficient de similitude sonde/radar entre des signaux de pluviométrie enregistrés par la sonde sur la fenêtre temporelle Δt et des signaux de pluviométrie du radar extraient à la position de la sonde pour la fenêtre de temps Δt.

Le prétraitement des données brutes peut aussi comprendre des opérations de vérification du jeu de données, en particulier vérifier si des valeurs sont manquantes ou ré-échantillonner le signal à une fréquence donnée pour permettre l'analyse statistique. A partir des données radar, qui sont des données spatialisées, le prétraitement peut consister à extraire un signal temporel en un point (à la position du pluviomètre), pour pouvoir faire l'analyse.

Dans un mode de réalisation, le coefficient de similitude sonde/radar C$_{S/R}$ est un critère statistique de mesure de la similitude. Selon différentes variantes d'implémentation, le coefficient de similitude peut être calculé à partir :

- d'une équation (1) de corrélation croisée (Cross Correlation) de type :

$$R = \frac{<RG(t)- \text{Radar(t)}> - <RG(t)><Radar(t)>}{\sqrt{<RG^2(t)> - <RG(t)>^2}\sqrt{<Radar^2(t)> - <Radar(t)>^2}} \qquad (1)$$

où RG(t) correspond au signal temporel de la sonde pluviométrique sur la fenêtre de temps considérée.
et Radar(t) correspond au signal temporel radar, reconstruit à partir de la donnée spatialisée (image radar), à la position de la sonde pluviométrique.

- d'une équation (2) de Nash-Sutcliffe de type :

$$E = 1 - \frac{\sum(\text{Radar(t)}- \text{RG(t)})^2}{\sum(\text{RG(t)}- \overline{\text{RG(t)}})^2} \qquad (2)$$

- d'une équation (3) d'index d'accord (Index Agreement) de type :

$$IA = 1 - \frac{<\left(\text{Radar(t)}- \text{RG(t)}\right)^2>}{<(|\text{Radar(t)}- <Radar(t)>|+|\text{RG(t)}- <RG(t)>|)^2>} \qquad (3)$$

Revenant à la figure 2, après l'étape de calcul du coefficient de similitude, le procédé permet dans une étape suivante 206, de comparer la valeur du coefficient de similitude sonde/radar C$_{S/R}$ obtenue à une valeur seuil S/R de similitude sonde/radar.

La valeur seuil peut être paramétrable en fonction des résultats de l'algorithme au cours de son fonctionnement. Le type de climat et donc la typologie de la pluie, ainsi que la densité de pluviomètre sur la zone d'étude ou encore la précision de la donnée radar sont autant de paramètres qui peuvent faire changer la valeur des seuils d'un site à l'autre. La détermination des seuils initiaux peut être faite à partir d'une étude sur des données historiques, et les valeurs peuvent être ensuite affinées en fonction des résultats de l'algorithme au cours de son fonctionnement.

Dans un mode de réalisation, une condition de seuil pour le critère de Nash-Sutcliffe (2) est : E > 0.

Dans un mode de réalisation, une condition de seuil pour le critère de corrélation croisée (1) ou celui d'index Agreement (3) est : R ou IA > [0.5, 0.6].

Si la valeur du coefficient de similitude obtenue à l'étape de calcul 204 est supérieure ou égale à la valeur seuil S/R prédéfinie, le procédé permet à l'étape suivante 208 de valider les données fournies par la sonde. Les données de la sonde considérées valides peuvent alors être prises en compte dans des processus ultérieurs, tels que des étapes de prévision.

Ainsi, le procédé est opéré sur une période [t - Δt] et le signal de la sonde est validé au temps t.

Dans un mode de réalisation, la durée de l'ensemble des étapes afin de valider les données d'une sonde est une période paramétrable, qui dépend de la typologie des pluies sur la zone d'étude (pluies intenses et courtes ou pluies moins intenses mais plus longues par exemple), et dépend des contraintes temps réel propre à la zone d'étude. Dans une application où les données pluviométriques sont utilisées pour anticiper l'état hydraulique d'un réseau d'assainissement ou d'un cours d'eau, le délai maximum de réponse du système de prévision pour faire face aux événements va conditionner le temps de réponse maximum autorisé pour opérer le procédé de validation de la présente invention.

Dans un mode de réalisation particulier, les données sont acquises sur une période de 5 minutes, et le procédé de l'invention génère un résultat de validation toutes les 15 à 30 minutes.

Dans un mode de réalisation, le procédé comprend une étape consistant à classer une sonde comme sonde défaillante si elle fournit des données invalides sur plusieurs périodes, et ainsi exclure les données qu'elle fournit de tout processus ultérieur. Le nombre de périodes pour marquer une sonde comme sonde défaillante peut être adapté selon des résultats antérieurs.

Si la valeur du coefficient de similitude obtenue à l'étape de calcul 204 est inférieure à la valeur seuil S/R prédéfinie ou branche 'non' de l'étape 206, avantageusement le procédé permet de ne pas invalider à ce stade les données de la sonde, en considérant qu'il s'agit d'un état indéterminé, et poursuit par des étapes 500 d'analyse plus poussée.

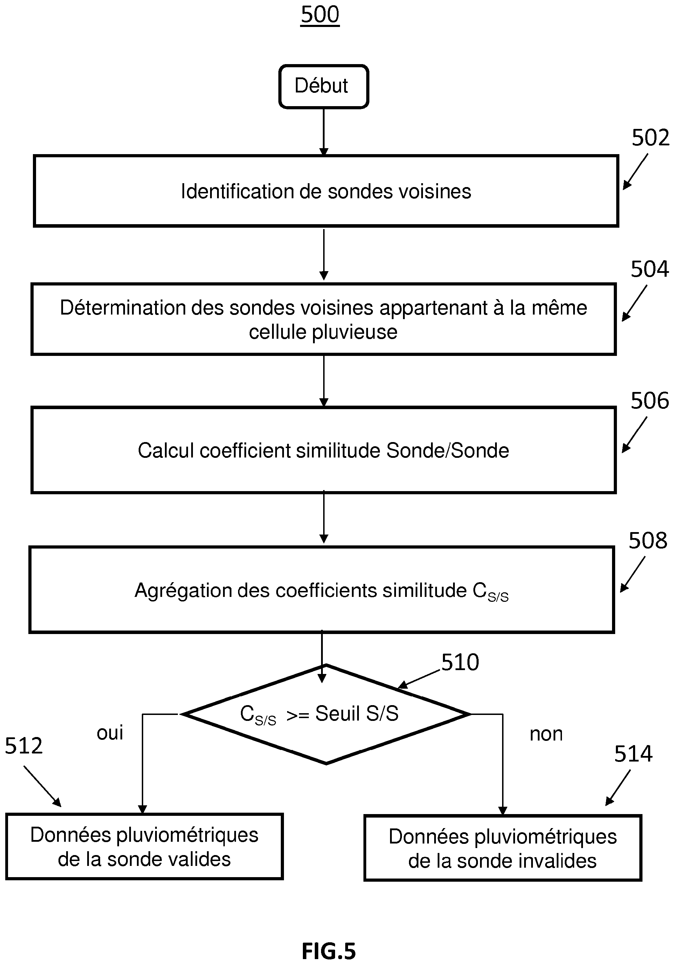

La figure 5 montre un enchainement d'étapes 500 du procédé de l'invention permettant de traiter les états indéterminés.

Tel que décrit précédemment, quand la valeur du coefficient de similitude sonde/radar est inférieure à la valeur seuil sonde/radar prédéfinie ou branche 'non' de l'étape 206, les données de la sonde ne peuvent pas être validées. Le procédé comprend une étape 502 consistant à identifier un ensemble de sondes voisines de la sonde analysée. Le voisinage d'une sonde peut être défini pour un périmètre donné autour de la sonde. L'ensemble des sondes sur une zone géographique et leur implantation étant répertoriés, la distance entre sondes peut être calculée.

Le procédé poursuit par une étape 504 consistant à déterminer parmi les sondes voisines de la sonde analysée, celles appartenant à une même cellule pluvieuse que la sonde. Dans le cadre de la présente invention, une cellule pluvieuse est définie comme un groupe de sondes dont les données météorologiques extraites à leur position respective au cours d'une même fenêtre de temps sont similaires, c'est-à-dire dont un critère de similitude entre les signaux de chaque sonde est supérieur à un seuil (i.e. les signaux sont semblables en terme de variation et d'intensité).

Une fois les sondes d'une même cellule pluvieuse identifiées, le procédé permet dans une étape suivante 506 de calculer un coefficient de similitude sonde/sonde entre les données pluviométriques de la sonde analysée et les données pluviométriques de chacune des sondes voisines appartenant à la même cellule pluvieuse.

Dans un mode de réalisation, le coefficient de similitude sonde/sonde est un critère statistique de mesure de la similitude entre deux signaux temporels provenant de deux sondes voisines d'une même cellule pluvieuse. Selon différentes variantes d'implémentation, le coefficient de similitude peut être calculé à partir :

- d'une équation de corrélation croisée de type :

$$R = \frac{<RG_2(t) - RG_1(t)> - <RG_2(t)><RG_1(t)>}{\sqrt{<RG_2{}^2(t)> - <RG_2(t)>^2}\sqrt{<RG_1{}^2(t)> - <RG_1(t)>^2}} \qquad (4)$$

- d'une équation de Nash-Sutcliffe de type :

$$E = 1 - \frac{\sum(RG_1(t) - RG_2(t))^2}{\sum(RG_2(t) - \overline{RG_2(t)})^2} \qquad (5)$$

- d'une équation d'index (Index Agreement) d'accord de type :

$$IA = 1 - \frac{<\left(RG_1(t) - RG_2(t)\right)^2>}{<(|RG_1(t) - <RG_1(t)>| + |RG_2(t) - <RG_2(t)>|)^2>} \qquad (6)$$

où $RG_1$ et $RG_2$ sont les signaux temporels des deux sondes à comparer.

Dans une étape suivante 508, le procédé permet d'agréger les résultats obtenus pour les différents coefficients de similitude sonde/sonde. Dans un mode de réalisation, l'agrégation des résultats peut consister à sélectionner le maximum des résultats. Le coefficient de similitude agrégé peut aussi être une moyenne des différents coefficients ou encore le minimum.

Dans une étape suivante 510, le procédé permet de comparer la valeur du coefficient de similitude sonde/sonde '$C_{S/S}$' sélectionné à une valeur seuil 'S/S' sonde/sonde.

Puis, le procédé permet :

- de valider les données pluviométriques de ladite sonde si la valeur du coefficient de similitude sonde/sonde est supérieure ou égale à la valeur seuil sonde/sonde (512) ; ou
- si la valeur du coefficient de similitude sonde/sonde est inférieure à la valeur seuil sonde/sonde, le procédé permet d'invalider les données de ladite sonde (514).

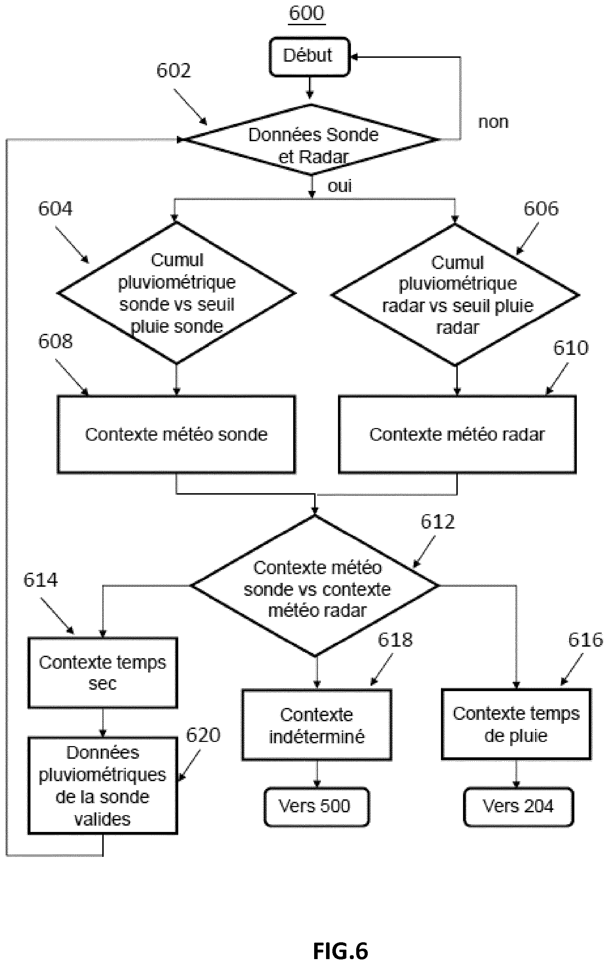

La figure 6 montre un enchainement d'étapes 600 du procédé de l'invention permettant de déterminer un contexte météorologique.

Après une étape 602 confirmant la réception de données brutes pluviométriques et météorologiques, le procédé comprend une étape 604 consistant à comparer un cumul pluviométrique pour la sonde analysée à un seuil de pluie sonde prédéfini, et une étape 606 consistant à comparer un cumul pluviométrique déterminé par le radar à un seuil de pluie radar prédéfini.

Le résultat de chaque comparaison permet de fournir un contexte météorologique respectivement par la sonde 608 et par le radar 610.

Le procédé permet ensuite de comparer à l'étape 612, les contextes météorologiques de la sonde et du radar. Les contextes peuvent être identiques et révéler un contexte dit de 'temps sec' 614, être identiques et révéler un contexte dit de 'temps de pluie' 616, ou être contradictoires et révéler un contexte dit 'indéterminé' 618.

Si le contexte est un temps sec, le procédé permet dans une étape suivante 620 valider les données pluviométriques de la sonde analysée, puis de reboucler sur l'étape 602 de réception de données.

Si le contexte est un temps de pluie, le procédé permet d'opérer les étapes (204) et suivantes de calcul du coefficient de similitude sonde/radar.

Si le contexte est indéterminé, le procédé permet d'opérer les étapes 500 permettant de traiter les états indéterminés.

Ainsi, il a été décrit un exemple de mise en oeuvre du procédé de l'invention permettant de valider des données fournies par une sonde pluviométrique. L'homme du métier pourra considérer que le procédé peut être opéré de manière synchrone pour une pluralité de sondes positionnées sur une zone géographique donnée, afin de déterminer l'ensemble des sondes produisant des données valides qui peuvent être utilisées dans des processus ultérieurs de type pilotage de réseau fluidique. L'exemple décrit ne détaille pas les sondes pluviométriques dans leurs caractéristiques techniques autres qu'étant des sondes aptes à fournir des données pluviométriques. Ainsi, le procédé peut opérer avec des sondes ayant ou non un mode de communication des données sans fil, pouvant être configurable et paramétrable.

## Revendications

1.  Procédé mis en oeuvre par ordinateur pour valider des données fournies par une sonde pluviométrique, le procédé comprenant des étapes consistant à :

    - recevoir (202) sur une fenêtre de temps déterminée, des données pluviométriques d'une sonde et des données météorologiques d'au moins un radar météorologique ;
    - calculer (204) un coefficient de similitude sonde/radar entre les données pluviométriques reçues de ladite sonde et les données météorologiques reçues dudit au moins un radar météorologique ;
    - comparer (206) la valeur du coefficient de similitude sonde/radar obtenue à une valeur seuil sonde/radar
    - si la valeur du coefficient de similitude sonde/radar est inférieure à la valeur seuil sonde/radar :

      - identifier (502) dans une zone géographique donnée, un ensemble de sondes voisines de ladite sonde ;
      - déterminer (504) parmi les sondes voisines celles appartenant à une même cellule pluvieuse que ladite sonde, une cellule pluvieuse regroupant des sondes dont les données météorologiques reçues dudit au moins un radar aux positions de ces sondes sont similaires au cours de ladite fenêtre de temps ;
      - calculer (506) un coefficient de similitude sonde/sonde entre les données pluviométriques de ladite sonde et les données pluviométriques de chacune des sondes voisines appartenant à la même cellule pluvieuse ;
      - agréger (508) les résultats des calculs de coefficient de similitude sonde/sonde pour obtenir une valeur de coefficient de similitude sonde/sonde ;
      - comparer (510) la valeur du coefficient de similitude sonde/sonde obtenue à une valeur seuil sonde/sonde ; et
      - valider (512) les données pluviométriques de ladite sonde si la valeur du coefficient de similitude sonde/sonde est supérieure ou égale à la valeur seuil sonde/sonde.

2.  Le procédé selon la revendication 1 dans lequel l'étape de calcul consiste à effectuer un prétraitement des données reçues, permettant de calculer un coefficient de similitude sonde/radar entre des signaux de pluviométrie enregistré par la sonde et des signaux de pluviométrie dudit au moins un radar extraient à la position de ladite sonde, lesdits signaux étant enregistrés sur ladite fenêtre de temps.

3. Le procédé selon la revendication 1 ou 2 dans lequel le coefficient de similitude sonde/radar est un critère statistique de mesure de la similitude choisi parmi les critères Index of Agreement, Nash-Sutcliffe ou corrélation croisée.

4. Le procédé selon l'une quelconque des revendications 1 à 3 dans lequel les données reçues sont relatives à une intensité de précipitations ou à une localisation de précipitations.

5. Le procédé selon l'une quelconque des revendications 1 à 4 comprenant après l'étape de comparaison, une étape consistant à invalider les données de ladite sonde si la valeur du coefficient de similitude sonde/sonde est inférieure à la valeur seuil sonde/sonde.

6. Le procédé selon l'une quelconque des revendications 1 à 5 dans lequel le coefficient de similitude sonde/sonde est un critère statistique de mesure de la similitude entre deux signaux temporels.

7. Le procédé selon l'une quelconque des revendications 4 à 6 dans lequel l'étape d'agrégation consiste à sélectionner la valeur maximum ou la valeur minimum des coefficients de similitude sonde/sonde ou à faire une moyenne des valeurs des coefficients de similitude sonde/sonde.

8. Le procédé selon l'une quelconque des revendications 1 à 7 comprenant après l'étape de réception de données pluviométriques et de données radar météorologiques, une étape consistant à comparer pour ladite sonde et pour ledit au moins un radar, des cumuls pluviométriques à un seuil de pluie afin de déterminer un contexte météorologique de présence de pluie ou d'absence de pluie, puis à opérer les étapes de calcul du coefficient de similitude sonde/radar si le contexte météorologique est la présence de pluie.

9. Le procédé selon la revendication 8 comprenant après l'étape de comparaison, une étape consistant à valider les données pluviométriques de ladite sonde si le contexte météorologique est l'absence de pluie, puis à reboucler sur les étapes de réception de données.

10. Le procédé selon la revendication 8 comprenant après l'étape de comparaison, une étape consistant à opérer les étapes des revendications 5 et 6 si la comparaison ne permet pas de définir un contexte météorologique de présence ou d'absence de pluie.

11. Le procédé selon l'une quelconque des revendications 1 à 10 dans lequel la durée de l'ensemble des étapes afin de valider les données de ladite sonde est une période paramétrable.

12. Le procédé selon la revendication 11 comprenant de plus une étape consistant à classer ladite sonde comme sonde défaillante si elle fournit des données invalides sur plusieurs périodes.

13. Produit programme d'ordinateur comprenant un programme, ledit programme comprenant des instructions de code permettant d'effectuer les étapes du procédé selon l'une quelconque des revendications 1 à 12, lorsque ledit programme est exécuté sur un ordinateur.

14. Système permettant de déterminer parmi une pluralité de sondes aptes à fournir des données pluviométriques, des sondes fournissant des données valides, la pluralité de sondes couvrant une zone donnée, le système comprenant des moyens pour mettre en oeuvre les étapes du procédé selon l'une quelconque des revendications 1 à 12.

15. Utilisation du procédé selon l'une quelconque des revendications 1 à 12 dans un procédé de pilotage d'un réseau fluidique comprenant au moins une étape de validation de données de sondes pluviométriques.

16. Utilisation du procédé selon l'une quelconque des revendications 1 à 12 dans un procédé de prévision d'inondations comprenant au moins une étape de validation de données de sondes pluviométriques.

**Patentansprüche**

1. Computerimplementiertes Verfahren zur Validierung von Daten, die von einer Niederschlagssonde bereitgestellt werden, wobei das Verfahren Folgende Schritte umfasst:

- Empfangen (202) von Niederschlagsdaten einer Sonde und Wetterdaten von mindestens einem meteorologischen Radar in einem bestimmten Zeitfenster;
- Berechnen (204) eines Koeffizienten der Sonden-/Radar-Ähnlichkeit zwischen den von der Sonde empfangenen Niederschlagsdaten und den von dem mindestens einen Wetterradar empfangenen Wetterdaten;
- Vergleichen (206) des Wertes des empfangenen Sonden-/Radar-Ähnlichkeitskoeffizienten mit einem Sonden-/Radar-Schwellenwert
- wenn der Wert des Sonden-/Radar-Ähnlichkeitskoeffizienten den Sonden-/Radar-Schwellenwert unterschreitet:

    - Identifizieren (502), in einem bestimmten geografischen Gebiet, einer Gruppe von der Sonde benachbarten Sonden;
    - Bestimmen (504), unter den benachbarten Sonden, derjenigen, die zu einer gleichen Regenzelle wie die Sonde gehören, wobei eine Regenzelle Sonden umfasst, deren von dem mindestens einen Radar empfangenen Wetterdaten während des Zeitfensters an den Positionen dieser Sonden ähnlich sind;
    - Berechnen (506) eines Sonden-/Sonden-Ähnlichkeitskoeffizienten zwischen den Niederschlagsdaten der Sonde und den Niederschlagsdaten jeder der benachbarten Sonden, die zu der gleichen Regenzelle gehören;
    - Aggregieren (508) der Ergebnisse der Sonden-/Sonden-Ähnlichkeitskoeffizientenberechnungen, um einen Sonden-/Sonden-Ähnlichkeitskoeffizientenwert zu erhalten;
    - Vergleichen (510) des erhaltenen Sonden-/Sonden-Ähnlichkeitskoeffizienten mit einem Sonden-/Sonden-Schwellenwert; und
    - Validieren (512) der Niederschlagsdaten der Sonde, wenn der Wert des Sonden-/Sonden-Ähnlichkeitskoeffizienten größer oder gleich dem Sonden-/Sonden-Schwellenwert ist.

2. Verfahren nach Anspruch 1, wobei der Schritt des Berechnens im Durchführen einer Vorverarbeitung der empfangenen Daten zur Berechnung eines Sonden-/Radar-Ähnlichkeitskoeffizienten zwischen von der Sonde aufgezeichneten Niederschlagssignalen und Niederschlagssignalen des mindestens einen Radars, die an der Position der Sonde extrahiert werden, wobei die Signale in dem Zeitfenster aufgezeichnet werden, besteht.

3. Verfahren nach Anspruch 1 oder 2, wobei der Sonden-/Radar-Ähnlichkeitskoeffizient ein statistisches Kriterium zur Messung der Ähnlichkeit ist, ausgewählt aus Index of Agreement, Nash-Sutcliffe oder Kreuzkorrelation.

4. Verfahren nach einem der Ansprüche 1 bis 3, wobei die empfangenen Daten sich auf eine Niederschlagsintensität oder auf eine Niederschlagsstelle beziehen.

5. Verfahren nach einem der Ansprüche 1 bis 4, das nach dem Schritt des Vergleichens einen Schritt des Verwerfens der Daten der Sonde umfasst, wenn der Wert des Sonden-/Sonden-Ähnlichkeitskoeffizienten den Sonden-/Sonden-Schwellenwert unterschreitet.

6. Verfahren nach einem der Ansprüche 1 bis 5, wobei der Sonden-/Sonden-Ähnlichkeitskoeffizient ein statistisches Kriterium zum Messen der Ähnlichkeit zwischen zwei Zeitsignalen ist.

7. Verfahren nach einem der Ansprüche 4 bis 6, wobei der Schritt des Aggregierens im Auswählen des maximalen Werts oder des minimalen Werts der Sonden-/Sonden-Ähnlichkeitskoeffizienten oder im Mitteln der Werte der Sonden-/Sonden-Ähnlichkeitskoeffizienten besteht.

8. Verfahren nach einem der Ansprüche 1 bis 7, umfassend nach dem Schritt des Empfangens von Niederschlags- und Wetterradardaten einen Schritt des Vergleichens, für die Sonde und für das mindestens eine Radar, kumulierter Niederschläge mit einer Regenschwelle, um einen meteorologischen Kontext des Vorhandenseins von Regen oder der Abwesenheit von Regen zu bestimmen, und anschließend des Ausführens der Schritte des Berechnens des Sonden-/Radar-Ähnlichkeitskoeffizienten, wenn der meteorologische Kontext Vorhandensein von Regen lautet.

9. Verfahren nach Anspruch 8, das nach dem Schritt des Vergleichens einen Schritt des Validierens der Niederschlagsdaten der Sonde, wenn der meteorologische Kontext Abwesenheit von Regen lautet, und anschließend des Zurückspringens auf die Schritte des Empfangs von Daten umfasst.

10. Verfahren nach Anspruch 8, das nach dem Schritt des Vergleichens einen Schritt des Durchführens der Schritte der Ansprüche 5 und 6 umfasst, wenn der Vergleich es nicht erlaubt, einen meteorologischen Kontext der Anwesenheit oder Abwesenheit von Regen zu definieren.

11. Verfahren nach einem der Ansprüche 1 bis 10, wobei die Dauer aller Schritte zum Validieren der Daten der Sonde ein parametrierbarer Zeitraum ist.

12. Verfahren nach Anspruch 11, ferner umfassend einen Schritt des Klassifizierens der Sonde als fehlerhafte Sonde, wenn sie ungültige Daten über mehrere Zeiträume bereitstellt.

13. Computerprogrammprodukt, das ein Programm umfasst, wobei das Programm Codeanweisungen zum Ausführen der Schritte des Verfahrens nach einem der Ansprüche 1 bis 12 umfasst, wenn das Programm auf einem Computer ausgeführt wird.

14. System zum Bestimmen, innerhalb einer Vielzahl von Sonden, die zur Bereitstellung von Niederschlagsdaten fähig sind, von Sonden, die gültige Daten bereitstellen, wobei die Vielzahl von Sonden einen gegebenen Bereich abdeckt, wobei das System Mittel zum Implementieren der Schritte des Verfahrens nach einem der Ansprüche 1 bis 12 umfasst.

15. Verwendung des Verfahrens nach einem der Ansprüche 1 bis 12 in einem Verfahren zur Steuerung eines Fluidnetzwerks, das mindestens einen Schritt der Validierung von Niederschlagssondendaten umfasst.

16. Verwendung des Verfahrens nach einem der Ansprüche 1 bis 12 in einem Verfahren zur Vorhersage von Überschwemmungen, das mindestens einen Schritt der Validierung von Niederschlagssondendaten umfasst.

**Claims**

1. A computer-implemented method for validating data provided by a rain gauge, the method comprising steps of:

   - receiving (202), in a defined time window, pluviometric data from a gauge and weather data from at least one weather radar;
   - computing (204) a coefficient of gauge/radar similarity between the pluviometric data received from said gauge and the weather data received from said at least one weather radar;
   - comparing (206) the value of the coefficient of obtained gauge/radar similarity to a threshold gauge/radar value
   - if the value of the coefficient of gauge/radar similarity is lower than the gauge/radar threshold value:

      - identifying (502) in a given geographical area, a set of neighbouring gauges of said gauge;
      - determining (504) among the neighbouring gauges those belonging to a same rain cell as said gauge, a rain cell grouping together gauges whose meteorological data received from said at least one radar at the positions of these gauges are similar during said time window;
      - calculating (506) a coefficient of gauge/gauge similarity between the rainfall data of said gauge and the rainfall data of each of the neighbouring gauges belonging to the same rain cell;
      - aggregating (508) the results of the calculations of the gauge/gauge similarity coefficient to obtain a coefficient of gauge/gauge similarity value;
      - comparing (510) the value of the coefficient of gauge/gauge similarity obtained with a gauge/gauge threshold value; and
      - validating (512) the rainfall data from said gauge if the value of the gauge/gauge similarity coefficient is greater or equal to the gauge/gauge threshold value.

2. The method according to claim 1, wherein the computing step consists in carrying out pre-processing of the received data, allowing a coefficient of gauge/radar similarity between pluviometry signals recorded by the gauge and pluviometry signals of said at least one radar that were extracted at the position of said gauge, said signals being recorded in said time window.

3. The method according to claim 1 or 2, wherein the coefficient of gauge/radar similarity is a statistical criterion measuring similarity chosen from the following criteria: index-of-agreement criterion, Nash-Sutcliffe criterion and cross-correlation criterion.

4. The method according to any one of claims 1 to 3, wherein the received data relate to a precipitation intensity or to a precipitation location.

5. The method according to any of claims 1 to 4, comprising, after the comparing step, a step of invalidating the data of said gauge if the value of the coefficient of gauge/gauge similarity is lower than the threshold gauge/gauge value.

6. The method according to any of claims 1 to 5, wherein the coefficient of gauge/gauge similarity is a statistical criterion measuring the similarity between two timedependent signals.

7. The method according to any one of claims 4 to 6, wherein the aggregating step consists in selecting the maximum value or the minimum value of the coefficients of gauge/gauge similarity or in taking an average of the values of the coefficients of gauge/gauge similarity.

8. The method according to any one of claims 1 to 7, comprising, after the step of receiving pluviometric data and radar weather data, a step of comparing, for said gauge and for said at least one radar, rainfall accumulations to a rain threshold in order to determine a weather context regarding the presence of rain or the absence of rain, then performing the steps of computing the coefficient of gauge/radar similarity if the weather context is the presence of rain.

9. The method according to claim 8, comprising, after the comparing step, a step of validating the pluviometric data of said gauge if the weather context is the absence of rain, then repeating the steps of receiving data.

10. The method according to claim 8, comprising, after the comparing step, a step of performing the steps of claims 5 and 6 if the comparison does not allow a weather context regarding the presence or absence of rain to be defined.

11. The method according to any one of claims 1 to 10, wherein the duration of all of the steps in order to validate the data of said gauge is a parameterisable period.

12. The method according to claim 11, further comprising a step of classifying said gauge as a faulty gauge if it provides invalid data over multiple periods.

13. A computer program product comprising a program, said program comprising code instructions allowing the steps of the method according to any one of claims 1 to 12 to be performed, when said program is executed on a computer.

14. A system allowing, among a plurality of gauges able to provide pluviometric data, gauges providing valid data to be determined, the plurality of gauges covering a given region, the system comprising means for implementing the steps of the method according to any one of claims 1 to 12.

15. The use of the method according to any one of claims 1 to 12 in a method for controlling a fluidic network comprising at least one step of validating rain-gauge data.

16. The use of the method according to any one of claims 1 to 12 in a method for forecasting floods comprising at least one step of validating rain-gauge data.

100

```
                    ┌─────────────────────────┐
                    │                         │ ←──── 102
                    │     Prévision de        │
                    │    fonctionnement       │
                    │                         │
                    └─────────────────────────┘
                                │
                                ▼
                    ┌─────────────────────────┐
                    │                         │ ←──── 104
                    │   Détermination des     │
                    │  stratégies de pilotage │
                    │                         │
                    └─────────────────────────┘
                                │
                                ▼
                    ┌─────────────────────────┐
                    │                         │ ←──── 106
                    │  Génération des consignes│
                    │                         │
                    └─────────────────────────┘
                                │
                                ▼
                    ┌─────────────────────────┐
                    │                         │ ←──── 108
                    │    Transmission des     │
                    │       consignes         │
                    │                         │
                    └─────────────────────────┘
```

**FIG.1**

## 200

```
                    ┌─────────────┐
                    │    Début    │
                    └─────────────┘
                           │
                           ▼
```

Réception données pluviométriques sonde et données météorologiques radar    202

Calcul coefficient similitude $C_{S/R}$ Sonde/Radar    204

206

$C_{S/R}$ >= Seuil S/R    →    non    →    Vers 500

│ oui
▼

Données pluviométriques de la sonde valides    208

**FIG.2**

**FIG.3**

**FIG.4**

500

```
┌─────────┐
│  Début  │
└─────────┘
```

Identification de sondes voisines — 502

Détermination des sondes voisines appartenant à la même cellule pluvieuse — 504

Calcul coefficient similitude Sonde/Sonde — 506

Agrégation des coefficients similitude $C_{S/S}$ — 508

510

$C_{S/S} >=$ Seuil S/S

oui                                        non

512                                        514

Données pluviométriques de la sonde valides

Données pluviométriques de la sonde invalides

**FIG.5**

<u>600</u>

```
                    ┌──────────┐
                    │  Début   │◄──────────┐
                    └────┬─────┘           │
  602                    │                 │
        ╲                ▼                 │  non
         ╲         ╱──────────╲            │
          ╲──►    ╱  Données   ╲───────────┘
               ╱  Sonde et Radar ╲
                ╲                ╱
                 ╲──────┬───────╱
                        │ oui
        ┌───────────────┴───────────────┐
  604   │                               │  606
    ╲   ▼                               ▼   ╱
     ╱──────────╲                  ╱──────────╲
    ╱   Cumul    ╲                ╱   Cumul    ╲
   ╱ pluviométrique╲             ╱ pluviométrique╲
   ╲ sonde vs seuil ╱            ╲ radar vs seuil pluie╱
    ╲  pluie sonde ╱              ╲    radar   ╱
     ╲──────┬─────╱                ╲─────┬────╱
  608        │                           │        610
    ╲        ▼                           ▼        ╱
  ┌─────────────────────┐    ┌─────────────────────┐
  │  Contexte météo     │    │  Contexte météo     │
  │      sonde          │    │      radar          │
  └──────────┬──────────┘    └──────────┬──────────┘
             └───────────┬──────────────┘
                         ▼                    612
                  ╱──────────────╲            ╱
                 ╱ Contexte météo ╲◄─────────╱
  614      ┌────╱ sonde vs contexte╲────┐
    ╲      │    ╲  météo radar    ╱     │
     ╲     │     ╲──────┬────────╱      │
      ▼    ▼            │               │
  ┌──────────────┐      ▼               ▼       616
  │Contexte temps│    ╱618   ┌─────────────────┐  ╱
  │     sec      │   ╱       │Contexte temps   │ ╱
  └──────┬───────┘  ▼        │  de pluie       │
         │    ┌──────────┐   └────────┬────────┘
         ▼    │ Contexte │            ▼
  ┌──────────┐│indéterminé│    ┌──────────┐
  │ Données  │└────┬─────┘     │ Vers 204 │
  │pluvio-   │     ▼           └──────────┘
  │métriques │ ┌──────────┐
  │de la sonde│ │ Vers 500 │
  │ valides  │ └──────────┘
  └────┬─────┘
       │  620
```

**FIG.6**

## RÉFÉRENCES CITÉES DANS LA DESCRIPTION

**Documents brevets cités dans la description**

- FR 3052567
- JP 2005017266 A

- JP 2004036134 A